# EUROPÄISCHE PATENTANMELDUNG

(11) **EP 3 712 013 A1**
(43) Veröffentlichungstag der Anmeldung: **23.09.2020**
(21) Anmeldenummer: 20166889.4
(22) Anmeldetag: 01.02.2017
(51) Int. Cl.: B60Q 1/26, A42B 3/04, B62J 6/057, B62J 6/165

(54) **FAHRRADHELM MIT INTEGRIERTEN BLINKLEUCHTEN**

(30) Priorität: 01.03.2016 CN 201620154058 U
(62) Teilanmeldung aus: 17759331.6
(71) Anmelder: Zhang, Ming, Beijiao - Shunde District, Foshan (CN)
(72) Erfinder: Zhang, Ming, Beijiao - Shunde District, Foshan (CN)
(74) Vertreter: RGTH

(57) **Zusammenfassung**

Die Erfindung betrifft einen Fahrradhelm mit automatischer Brems- und Lenkanzeige, der einen Helmkörper (1) aufweist, an dem jeweils vorne und hinten seitlich ein linker (2) und rechter Blinker (3) vorgesehen sind. Der Fahrradhelm umfasst ferner ein Steuermodul (14), an dem die Blinker (2, 3) elektrisch angeschlossen sind, und ein kabelloses Empfangsmodul (13), das an dem Steuermodul (14) angeschlossen ist. Außerdem ist ein kabelloses Fernsteuermodul (12) vorgesehen, das mit dem kabellosen Empfangsmodul (13) per Funk kommuniziert, wobei an dem kabellosen Fernsteuermodul (12) eine Bremsprüfeinheit (10) und eine manuelle Steuereinheit (11) elektrisch angeschlossen sind, wobei die Bremsprüfeinheit (10) bei Betätigung einer Radbremse, und die manuelle Steuereinheit (11) bei Betätigung eines Blinker-Schalters ein entsprechendes Signal erzeugen, das über das kabellose Fernsteuermodul (12) an den Fahrradhelm übertragen wird, um die Blinker (2, 3) anzusteuern. Dadurch kann der Radfahrer nachfolgenden Fahrzeugen einen entsprechenden Hinweis geben. Somit wird die Sicherheit des Radfahrers erhöht.

## Beschreibung

### Technisches Gebiet

Die vorliegende Erfindung betrifft ein Fahrradzubehör, genauer einen Fahrradhelm mit integrierten Blinkern.

### Technischer Hintergrund

Aus Gründen des Umweltschutzes fahren immer mehr Leute Fahrrad oder betreiben Radfahren als Sportart. Aber es besteht ein gewisses Sicherheitsrisiko während der Fahrradfahrt. Radfahrer tragen daher häufig einen Fahrradhelm zum Schutz des Kopfes vor möglichen Verletzungen. Bekannte Fahrradhelme werden normalerweise aus hochfesten Werkstoffen, wie z. B Metall, Baukunststoff, Kevlarfaser usw., hergestellt. Durch die Verformung dieser Werkstoffe wird der größte Teil der Aufprallkraft absorbiert, wodurch die Verletzung des Kopfes verringert wird und die Sicherheit und Gesundheit des Nutzers geschützt werden. Aber all diese Helme bieten erst dann einen Schutz, nachdem der Unfall bereits passiert ist. Bekannte Helme haben keine Fähigkeit zur Verhütung eines Unfalls. Insbesondere in der Nacht oder in dunkler Umgebung ist es für andere schwierig, die Fahrradposition und die Lenkabsicht des Radfahrers zu erkennen, weil das Fahrrad dunkel ist und meistens keine Lampe und keinen Blinker hat. In diesem Zusammenhang ist es möglich, dass der Fahrradfahrer durch andere Verkehrsteilnehmer verletzt wird.

### Inhalt der Erfindung

Die Aufgabe dieser Erfindung besteht darin, die genannten Nachteile zu überwinden und einen Schutzhelm mit verbesserten Sicherheitsmerkmalen zu schaffen, der einfachen konstruiert, bequem zu tragen und zu niedrigen Kosten herzustellen ist.

Diese Aufgabe wird gelöst durch einen Fahrradhelm mit automatischer Brems- und Lenkanzeige, der einen Heimkörper aufweist, an dem jeweils vorne und hinten seitlich ein linker und rechter Blinker vorgesehen sind. Der Fahrradhelm umfasst ferner ein Steuermodul, an dem die Blinker elektrisch angeschlossen sind, und ein kabelloses Empfangsmodul, das an dem Steuermodul angeschlossen ist.

Ferner ist ein kabelloses Fernsteuermodul vorgesehen, das mit dem kabellosen Empfangsmodul per Funk kommuniziert, wobei an dem kabellosen Fernsteuermodul eine Bremsprüfeinheit und eine manuelle Steuereinheit elektrisch angeschlossen sind, wobei die Bremsprüfeinheit bei Betätigung einer Radbremse, und die manuelle Steuereinheit bei Betätigung eines Blinker-Schalters ein entsprechendes Signal erzeugen, das über das kabellose Fernsteuermodul an den Fahrradhelm übertragen wird, um die Blinker anzusteuern

Eine Bremsleuchte ist vorzugsweise an einer hinteren mittleren Position des Heimkörpers vorgesehen.

Die sogenannte Bremsprüfeinheit ist umfasst z. B. einen am Bremsgriff vorgesehenen Lageschalter. Bei einer Betätigung des Bremsgriffes wird der Lageschalter ein- oder ausgeschaltet, so dass ein entsprechendes Steuersignal erzeugt wird.

Die sogenannte manuelle Steuereinheit umfasst z. B. eine am Handgriff vorgesehene Taste.

Für das kabellose Empfangsmodul und das kabellose. Fernsteuermodul wird vorzugsweise ein 2.4 G-Modul verwendet.

Der linke Blinker und der rechte Blinker sind vorzugsweise LED-Leuchten.

Die Bremsleuchte ist vorzugsweise ebenfalls eine LED-Leuchte.

Der Fahrradhelm kann zusätzlich auch ein Gyroskop bzw. einen Gyrosensor umfassen. In diesem Fall ist das Steuermodul mit dem Gyroskop elektrisch verbunden. Wenn der Radfahrer den Kopf nach links oder rechts bewegt, wird die Kopfbewegung vom Gyroskop erfasst und je nach Richtung entweder der rechte oder der linke Blinker angesteuert.

Die Vorteile eines solchen Fahrradhelms sind wie folgt: 1) Die Struktur und der Zusammenbau sind einfach und die Herstellungskosten sind niedrig 2) Am Helm ist ein Blinker vorgesehen. Beim Lenken kann der Radfahrer durch den Blinker den nachfolgenden Fahrzeugen einen Hinweis geben, damit die Sicherheit des Fahrers erhöht wird. 3) Auch beim Bremsen kann ein entsprechender Hinweis erfolgen. Neben der Erfüllung diese Anforderungen wird die Systemkomplexität so vereinfacht, dass der Marktvertrieb begünstigt wird. 4) Das Steuersystem kann auch über eine Drahtlosverbindung mit der Bremsprüfeinheit und der manuellen Steuereinheit kommunizieren, wodurch vermieden wird, dass ein Kabel die Fahrt des Radfahrers stört.

### Kurze Beschreibung der Zeichnungen

Die Erfindung wird nachstehend anhand der beigefügten Zeichnungen beispielhaft erläutert. Es zeigen:
Fig. 1: eine perspektivische Ansicht eines Fahrradhelms;
Fig. 2: eine Rückansicht des Fahrradhelms von Fig. 1;

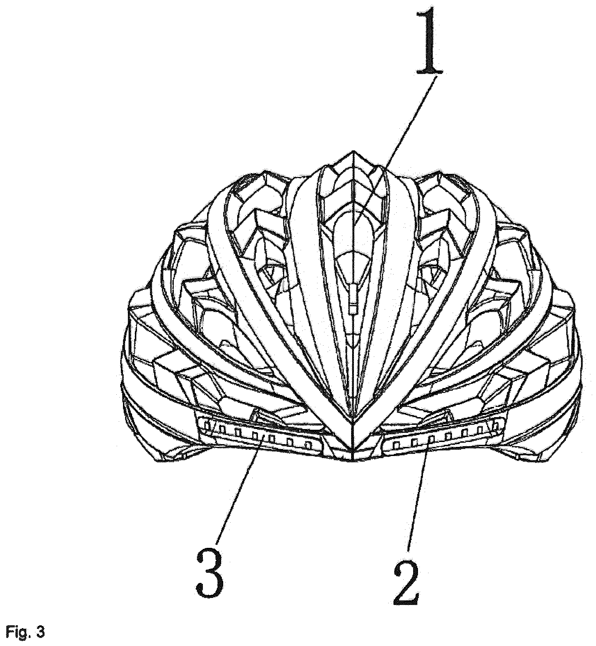

Fig. 3: eine Vorderansicht des Fahrradhelms von Fig. 1; und

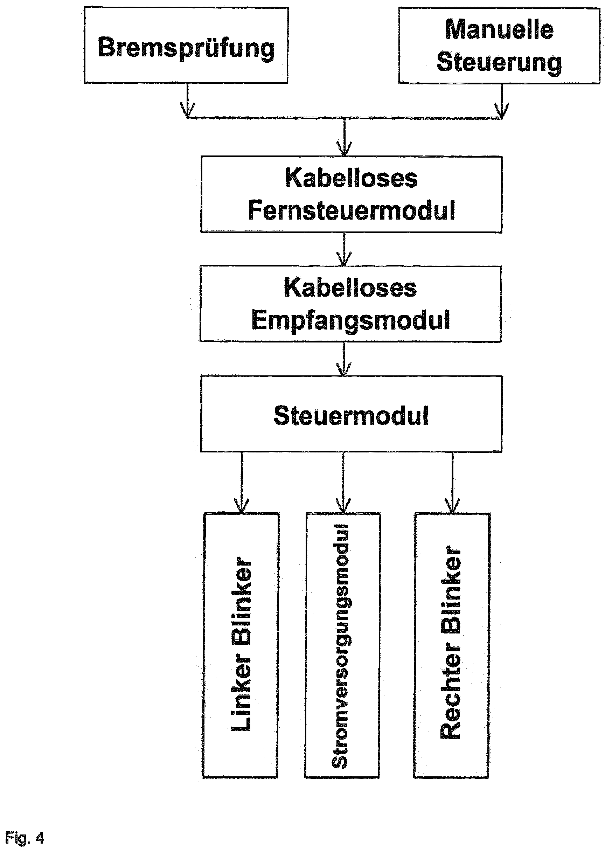

Fig. 4: eine schematische Darstellung eines Systems zum Steuern eines solchen Fahrradhelms.

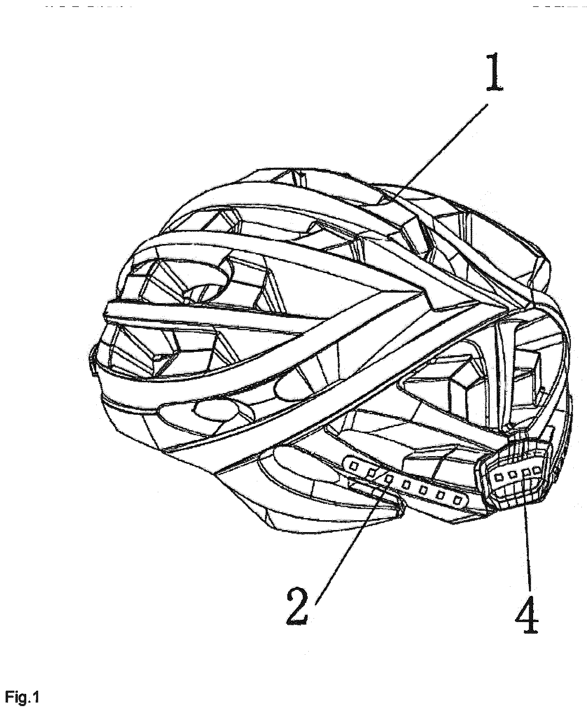

Fig. 1 zeigt einen Fahrradhelm mit automatischer Bremsanzeige und automatischer Lenkanzeige. Der Fahrradhelm umfasst einen Heimkörper 1, an dem jeweils vorne und hinten seitlich ein linker Blinker 2 und ein rechter Blinker 3 angeordnet sind. Außerdem ist am Fahrradhelm eine Bremsleuchte 4 vorgesehen. Die genannten Blinker 2, 3 und die Bremsleuchte 4 sind an einem Steuermodul 14 elektrisch angeschlossen. Die Blinker 2, 3 können z. B. aktiviert werden, wenn der Radfahrer von Hand einen Blinker setzt oder die Bremse betätigt. Die Bremsleuchte 4 wird angesteuert, wenn der Radfahrer die Bremse betätigt. Die Bedingung, unter der die Blinker 2, 3 oder die Bremsleuchte 4 angesteuert werden, ist im Prinzip frei vorgebbar.

Das Steuermodul 14 ist mit einem kabellosen Empfangsmodul 13 verbunden, das mit einem kabellosen Fernsteuermodul 12 kommuniziert. Das Steuermodul 14 und das kabellose Empfangsmodul 13 sind vorzugsweise im Fahrradhelm integriert. Das kabellose Fernsteuermodul 12 ist vorzugsweise am Fahrrad befestigt. An dem Fernsteuermodul 12 sind eine Bremsprüfeinheit 10 und eine manuelle Steuereinheit 11 elektrisch angeschlossen. Die Blinker 2, 3 können z. B. abhängig von einem Signal der Bremsprüfeinheit 10 und/oder der manuellen Steuereinheit 11 angesteuert werden.

Die sogenannte Bremsprüfeinheit 10 umfasst z.B. einen am Bremsgriff vorgesehenen Lageschalter. Bei einer Betätigung des Bremsgriffes wird der Lageschalter ein- oder ausgeschaltet, so dass ein entsprechendes Steuersignal erzeugt wird.

Die sogenannte manuelle Steuereinheit 11 umfasst z. B. eine am Handgriff vorgesehene Taste.

Für das kabellose Empfangsmodul 13 und das kabellose Fernsteuermodul 12 wird vorzugsweise ein 2.4 G-Modul verwendet.

Der linke Blinker 2 und der rechte Blinker 3 sind vorzugsweise LED-Leuchten.

Die Bremsleuchte 4 ist vorzugsweise ebenfalls eine LED-Leuchte.

Der Fahrradhelm kann zusätzlich auch ein Gyroskop bzw. einen Gyrosensor umfassen. In diesem Fall ist das Steuermodul 14 mit dem Gyroskop elektrisch verbunden. Wenn der Radfahrer den Kopf nach links oder rechts bewegt, wird die Kopfbewegung vom Gyroskop erfasst und je nach Richtung entweder der rechte oder der linke Blinker 2, 3 angesteuert.

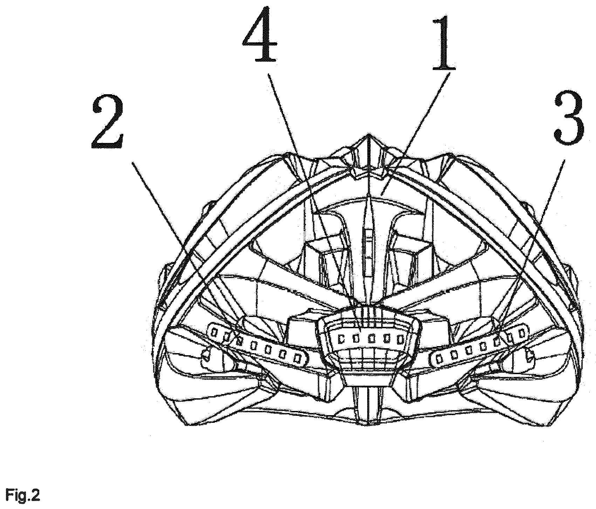

Die Funktionsweise des dargestellten Fahrradhelms wird im Folgenden beispielhaft näher erläutert. Wenn der Radfahrer den Bremsgriff beim Fahrrad fahren betätigt, um zu bremsen, wird ein daran vorgesehener Lageschalter eingeschaltet. Der Lageschalter erzeugt dann ein entsprechendes elektrisches Signal im System. Das kabellose Fernsteuermodul 12 sendet folglich ein elektrisches Signal aus, das von dem am Fahrradhelm vorgesehenen kabellosen Empfangsmodul 13 empfangen wird. Wenn das System entsprechend konfiguriert ist, leuchten z. B. der linke und rechte Blinker 2, 3 gleichzeitig, so dass das Bremssignal zu vorderen und hinteren Fahrzeugen gesendet wird. Neben den Blinkern 2, 3 kann der Fahrradhelm, wie in Fig. 2 dargestellt ist, auch eine Bremsleuchte 4 umfassen. In diesem Fall leuchtet vorzugsweise auch die Bremsleuchte 4, wenn der Radfahrer das Fahrrad bremst.

Wenn der Radfahrer abbiegen möchte, kann erz. B. die manuelle Steuereinheit 11 am Lenker von Hand betätigen. So kann erz. B. einen Blinker- Schalter nach rechts drücken, um ein entsprechendes Signal zu erzeugen, das dann von dem kabellosen Empfangsmodul 13 empfangen wird. Das Steuermodul 14 steuert dann den rechten Blinker 3 an, so dass vor oder hinter dem Radfahrer befindliche Fahrzeuge das Blinksignal erkennen können. Somit wird die Fahrsicherheit des Anwenders erhöht.

Außerdem wird der Anwendungskomfort dadurch erhöht, dass im Fahrradhelm ein Gyroskop vorgesehen ist, das an der Steuerung 14 elektrisch angeschlossen ist. Die Steuerung 14 enthält eine bestimmte Steuerkennzahl, die vorzugsweise vom Nutzer nach Wunsch vorgegeben werden kann. Wenn der Radfahrer innerhalb eines gewissen Zeitraums zwei oder mehrmals in eine Richtung lenkt (entsprechend der Steuerkennzahl) oder den Kopf zwei oder mehrmals in eine Richtung bewegt, wird der Blinker 2, 3 in dieser Richtung gestartet. Alternativ oder zusätzlich kann das System auch derart ausgebildet sein, dass die Bremsleuchte 4 angesteuert wird, wenn der Radfahrer innerhalb eines gewissen Zeitraums zwei oder mehrmals den Kopf hebt oder senkt. Die genaue Art und Weise kann der Hersteller oder Nutzer nach eigenen Vorgaben entsprechend konfigurieren.

Das Grundprinzip und die Vorteile dieser Erfindung sind wie oben beschrieben. Dem Fachmann in dieser Branche ist bewusst, dass diese Erfindung nicht durch die oben genannten Ausführungsbeispiele eingeschränkt wird. Die oben genannten Ausführungsbeispiele und die Beschreibung dienen lediglich zur Erläuterung des Prinzips dieser Erfindung. Unter der Voraussetzung, dass Sinn und Anwendungsbereich dieser Erfindung nicht entkoppelt sind, kann diese Erfindung noch geändert und verbessert werden, z. B. die Arbeitsweise des Blinkers und die Arten und Formen der Leuchte, usw" Alle Änderungen und Verbesserungen liegen im Schutzbereich dieser Erfindung.

## Patentansprüche

1. Fahrradhelm mit automatischer Brems- und Lenkanzeige, der einen Helmkörper (1) aufweist, an dem ein linker (2) und rechter Blinker (3) vorgesehen sind,
**dadurch gekennzeichnet,**
**dass** der Fahrradhelm ferner ein Steuermodul (14), ein kabelloses Empfangsmodul (13) und ein kabelloses Fernsteuermodul (12) umfasst
, wobei an dem kabellosen Fernsteuermodul (12) eine manuelle Steuereinheit (11) elektrisch angeschlossen ist, wobei die manuelle Steuereinheit (11) bei Betätigung eines Blinker-Schalters ein entsprechendes Signal erzeugen, das über das kabellose Fernsteuermodul (12) an den Fahrradhelm übertragen wird, um die Blinker (2, 3) anzusteuern.

2. Fahrradhelm mit automatischer Brems- und Lenkanzeige nach Anspruch 1, **dadurch gekennzeichnet, dass** der linke und rechte Blinker (2,3) jeweils vorne und/oder hinten seitlich an dem Helmkörper (1) angeordnet sind.

3. Fahrradhelm mit automatischer Brems- und Lenkanzeige nach Anspruch 1 oder 2, **dadurch gekennzeichnet, dass** die Blinker (2, 3) elektrisch an dem Steuermodul (14) angeschlossen sind;
und/oder,
das kabellose Empfangsmodul (13) an dem Steuermodul (14) angeschlossen ist; und/oder,
das kabellose Fernsteuermodul (12) mit dem kabellosen Empfangsmodul (13) per Funk kommuniziert.

4. Fahrradhelm mit automatischer Brems- und Lenkanzeige nach einem der vorherigen Ansprüche, **dadurch gekennzeichnet, dass** eine Bremsprüfeinheit (10) vorgesehen ist, wobei die Bremsprüfeinheit (10) an dem kabellosen Fernsteuermodul (12) elektrisch angeschlossen ist, wobei die Bremsprüfeinheit (10) bei Betätigung einer Radbremse ein entsprechendes Signal erzeugen, das über das kabellose Fernsteuermodul (12) an den Fahrradhelm übertragen wird, um die Blinker (2, 3) anzusteuern.

5. Fahrradhelm mit automatischer Brems- und Lenkanzeige nach einem der vorherigen Ansprüche , **dadurch gekennzeichnet, dass** die Bremsprüfeinheit (10) einen an einem Bremsgriff vorgesehenen Schalter umfasst.

6. Fahrradhelm mit automatischer Brems- und Lenkanzeige nach einem der vorherigen Ansprüche, **dadurch gekennzeichnet, dass** die manuelle Steuereinheit (11) eine am Handgriff vorgesehene Steuertaste umfasst.

7. Fahrradhelm mit automatischer Brems- und Lenkanzeige nach einem der vorherigen Ansprüche, **dadurch gekennzeichnet, dass** eine Bremsleuchte (4) an einer hinteren mittleren Position des Helmkörpers (1) vorgesehen ist.

8. Fahrradhelm mit automatischer Brems- und Lenkanzeige nach einem der vorherigen Ansprüche, **dadurch gekennzeichnet, dass** ein 2.4 G-Modul für das kabellose Empfangsmodul (13) und das kabellose Fernsteuermodul (12) verwendet wird.

9. Fahrradhelm mit automatischer Brems- und Lenkanzeige nach einem der vorherigen Ansprüche, **dadurch gekennzeichnet, dass** der linke Blinker (2) und der rechte Blinker (3) als LED-Leuchten ausgebildet sind.

10. Fahrradhelm mit automatischer Brems- und Lenkanzeige nach einem der vorherigen Ansprüche, **dadurch gekennzeichnet, dass** die Bremsleuchte (4) als LED-Leuchte ausgebildet ist.

11. Fahrradhelm mit automatischer Brems- und Lenkanzeige nach einem der vorherigen Ansprüche, **dadurch gekennzeichnet, dass** ein Gyroskop vorgesehen ist, das an dem Steuermodul (14) elektrisch angeschlossen ist, so dass bei einer Kopfbewegung des Radfahrers der rechte oder linke Blinker (2, 3) angesteuert wird.
